(19) Europäisches Patentamt
European Patent Office
Office européen des brevets

(11) **EP 4 535 193 A1**

(12) **EUROPEAN PATENT APPLICATION**
published in accordance with Art. 153(4) EPC

(43) Date of publication:
**09.04.2025 Bulletin 2025/15**

(21) Application number: **23814711.0**

(22) Date of filing: **17.03.2023**

(51) International Patent Classification (IPC):
*G06F 16/9032* (2019.01)   *G06F 16/9035* (2019.01)
*G06F 16/906* (2019.01)   *G06F 16/901* (2019.01)

(52) Cooperative Patent Classification (CPC):
Y02D 10/00

(86) International application number:
**PCT/CN2023/082093**

(87) International publication number:
**WO 2023/231513 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 CN 202210612157**

(71) Applicant: **Unidt (Shanghai) Co., Ltd.
Shanghai 200040 (CN)**

(72) Inventor: **CAI, Hua
Shanghai 200040 (CN)**

(74) Representative: **Cabinet Le Guen Maillet
3, impasse de la Vigie
CS 71840
35418 Saint-Malo Cedex (FR)**

(54) **CONVERSATION CONTENT GENERATION METHOD AND APPARATUS, AND STORAGE MEDIUM AND TERMINAL**

(57)    A conversation content generation method and apparatus, and a storage medium and a terminal. The method comprises: acquiring the current discourse, which is input by a user; reading a preset topic transfer map and a preset target topic, wherein the topic transfer map comprises a plurality of nodes and connection lines between the nodes, the nodes correspond to topics on a one-to-one basis, each connection line points to a second node from a first node, the weight of the connection line is used for indicating the probability of transferring a topic corresponding to the first node to a topic corresponding to the second node, and the topic transfer map comprises a node corresponding to the target topic; determining a topic of reply content of the current discourse at least according to the current discourse, the topic transfer map and the target topic, and recording the topic as a reply topic; and generating the reply content of the current discourse at least according to the reply topic. By means of the solution, active guidance of a topic can be realized during the process of a human-machine conversation, and the conversation is naturally guided to a target topic.

```
                                              ┌─ S11
   a current utterance entered by a user is acquired

                                              ┌─ S12
   a preset topic transfer graph and a preset target topic are read

                                              ┌─ S13
   a topic of reply content of the current utterance is determined at least
   based on the current utterance, the topic transfer graph and the target topic,
   and recorded as a reply topic

                                              ┌─ S14
   the reply content of the current utterance is generated at least based on the
   reply topic
```

**FIG. 1**

## Description

CROSS-REFERENCE TO RELATED APPLICATIONS

This application claims priority to Chinese Patent Application No. 202210612157.4, filed on May 31, 2022, and entitled "CONVERSATION CONTENT GENERATION METHOD AND APPARATUS, AND STORAGE MEDIUM AND TERMINAL", the entire disclosure of which is incorporated herein by reference.

TECHNICAL FIELD

The present disclosure generally relates to human-computer interaction technology field, and more particularly, to a conversation content generation method and apparatus, a storage medium and a terminal.

BACKGROUND

Human-computer interaction technology refers to a process of information exchange between a people and a computer using a certain dialogue language and a certain interactive method to complete a certain task, which builds a bridge between the people and the computer. The human-computer interaction technology, especially human-computer dialogue technology that enables the computer to understand and use natural language to achieve human-computer communication, is a significant challenge for artificial intelligence. In recent years, with the rise of deep learning, the field of human-computer dialogue has also made great progress. In the field of human-computer dialogue, there are task-oriented dialogue system, question-answering dialogue system, and chit-chat dialogue system.

Specifically, the task-oriented dialogue system is a dialogue system built based on a modeling method of task-oriented dialogue. Task-oriented dialogue refers to multi-round dialogue driven by tasks. The computer needs to determine a user's goals through understanding, active inquiry, clarification, etc., and return correct results after calling corresponding API for query so as to complete the user's needs. Task-oriented dialogue can be understood as a sequential decision-making process. During the dialogue, the computer needs to update and maintain an internal dialogue state by understanding the user's statement, and afterward select a next optimal action (such as confirming requirements, asking for restrictions, providing results, etc.) based on the current dialogue state so as to complete the task. Task-oriented dialogue is usually a modular structure with strong interpretability and easy implementation. Most practical task-oriented dialogue systems in the industry adopt such structure. However, this structure is inflexible, each module is relatively independent, and it is difficult to jointly tune and adapt to varied application scenarios. In addition, as errors among modules may accumulate layer by layer, upgrade of a single module may also require adjustment of an entire system.

The question-answering dialogue system usually refers to a one-question-one-answer system. The user raises a question, and the system returns a correct answer by parsing the question and searching a knowledge base.

The chit-chat dialogue system is a dialogue system built based on a modeling method of more free open-domain dialogue. A goal of the chit-chat dialogue is to generate interesting and informative natural responses so that the human-computer dialogue can continue. At present, existing solutions usually use some end-to-end generative models or sequence-to-sequence (seq2seq) model architectures to generate response content, however, coherence of the dialogue still needs to be improved. From above, in existing human-computer dialogue solutions, the computer usually makes responses to the user's questions passively, but cannot actively and naturally guide topics in conversation.

Therefore, there is an urgent need for a conversation content generation method where topics can be actively guided and dialogues can be naturally guided to target topics during human-computer conversation.

SUMMARY

Embodiments of the present disclosure may enable topics to be actively guided and dialogues to be naturally guided to target topics during human-computer conversation.

In an embodiment of the present disclosure, a conversation content generation method is provided, including: acquiring a current utterance entered by a user; reading a preset topic transfer graph and a preset target topic, wherein the topic transfer graph includes a plurality of nodes and connecting lines between the nodes, the plurality of nodes correspond to topics in one-to-one correspondence, each of the connecting lines points from a first node to a second node, a weight of the connecting line indicates probability of transferring from a topic corresponding to the first node to a topic corresponding to the second node, and the topic transfer graph includes a node corresponding to the target topic; determining a topic of reply content of the current utterance at least based on the current utterance, the topic transfer graph and the target topic, and recording the topic of the reply content of the current utterance as a reply topic; and generating the reply content of the current utterance at least based on the reply topic.

Optionally, a method for constructing the topic transfer graph includes: acquiring a plurality of dialogue corpora, wherein each of the plurality of dialogue corpora includes a plurality of rounds of human-computer dialogue samples, each of the plurality of rounds of human-computer dialogue samples has pre-labeled first label and second label, the first label indicates a topic of the human-computer dialogue sample of the round, and the second label indicates whether the topic of the human-computer dialogue sample of the round is the same as a topic of a next round of human-computer dialogue sample; and generating the topic transfer graph based on the plurality of dialogue corpora.

Optionally, said determining the topic of the reply content of the current utterance at least based on the current utterance, the topic transfer graph and the target topic includes: calculating transfer probability of a current topic, wherein the current topic is a last reply topic or is determined based on the current utterance; and determining whether the transfer probability is greater than a first preset threshold, determining the reply topic from the topic transfer graph in response to the transfer probability being higher than the first preset threshold, and using the current topic as the reply topic in response to the transfer probability being lower than or equal to the first preset threshold.

Optionally, said determining whether the transfer probability is greater than the first preset threshold includes: in response to similarities between the current topic and topics corresponding to each node in the topic transfer graph being less than or equal to a second preset threshold, determining that the transfer probability is lower than the first preset threshold.

Optionally, the transfer probability of the current topic is calculated by a pre-trained topic planning model, the topic planning model includes a language representation network, an attention network, a first feature calculation network and a first classifier, and said calculating the transfer probability of the current topic includes: extracting semantic information of the current utterance and a target utterance using the language representation network to acquire a semantic feature vector; calculating an attention vector using the attention network based on the semantic feature vector and a topic transfer matrix, wherein the topic transfer matrix is acquired by vectorizing the topic transfer graph using a graph embedding algorithm; calculating a topic evaluation vector using the first feature calculation network based on the attention vector and the semantic feature vector; and calculating the transfer probability using the first classifier based on the topic evaluation vector.

Optionally, said calculating the transfer probability based on the topic evaluation vector includes: fusing the topic evaluation vector and the attention vector to acquire a first fusion vector; and calculating the transfer probability based on the first fusion vector.

Optionally, prior to calculating the transfer probability based on the topic evaluation vector, the method further includes: calculating a product of the topic evaluation vector and a first enhancement factor, and updating the topic evaluation vector based on the product; wherein the first enhancement factor is calculated using the following formula:

$$fe = \tanh\left(we \times ae + ve \times ap + be\right),$$

where *fe* is the first enhancement factor, *we* is a preset first weight matrix, *ae* is the topic evaluation vector, *ve* is a preset second weight matrix, *ap* is the attention vector, and *be* is a preset first bias vector for characterizing disturbance.

Optionally, the topic planning model further includes a second feature calculation network and a second classifier, and said selecting the reply topic from the topic transfer graph includes: calculating a topic guidance vector using the second feature calculation network based on the topic evaluation vector and the attention vector; and determining the reply topic using the second classifier based on the topic guidance vector.

Optionally, said determining the reply topic based on the topic guidance vector includes: fusing the topic guidance vector and the attention vector to acquire a second fusion vector; and determining the reply topic based on the second fusion vector.

Optionally, prior to determining the reply topic based on the topic guidance vector, the method further includes: calculating a product of the topic guidance vector and a second enhancement factor, and updating the topic guidance vector based on the product; wherein the second enhancement factor is calculated using the following formula:

$$fc = sigmoid\left(wc \times he + vc \times ap + bc\right),$$

where *fc* is the second enhancement factor, *wc* is a preset third weight matrix, *he* is the topic guidance vector, *vc* is a preset fourth weight matrix, *ap* is the attention vector, and *bc* is a preset second bias vector for characterizing disturbance.

Optionally, said generating the reply content of the current utterance at least based on the reply topic includes: reading a preset knowledge graph, wherein the knowledge graph includes common sense knowledge and/or specific knowledge, wherein the specific knowledge refers to knowledge in a specific field, and the specific field is determined by the target topic; determining target knowledge from the knowledge graph based on the reply topic; and generating the reply content based on the target knowledge and the reply topic.

Optionally, the knowledge graph includes the common sense knowledge and the specific knowledge, the target knowledge includes target common sense knowledge and target specific knowledge, and said determining the target knowledge from the knowledge graph based on the reply topic includes: calculating a similarity between the reply topic and the target topic; and selecting the common sense knowledge and the specific knowledge based on the similarity to acquire the target knowledge, wherein the higher the similarity, the greater the proportion of the target specific knowledge in the target knowledge, and the smaller the proportion of the target common sense knowledge in the target knowledge.

Optionally, the reply content is calculated by a pre-trained reply generation model, the reply generation model includes an encoder, a knowledge selector and a decoder, and said generating the reply content of the current utterance at least based on the reply topic includes: calculating a target knowledge encoding vector using the knowledge selector based on an initial knowledge encoding vector and a content encoding vector; fusing the target knowledge encoding vector and the content encoding vector to acquire a fusion encoding vector; and generating the reply content using the decoder at least based on the fusion encoding vector; wherein the initial knowledge encoding vector is acquired by encoding the knowledge graph using the encoder, the content encoding vector includes a topic encoding vector and/or a dialogue encoding vector, the topic encoding vector is acquired by encoding the reply topic using the encoder, and the dialogue encoding vector is acquired by encoding a dialogue history with the user using the encoder.

Optionally, said generating the reply content at least based on the fusion encoding vector includes: decoding the fusion encoding vector to acquire a first latent vector of an i-th word in the reply content, wherein i is a positive integer; decoding the dialogue encoding vector to acquire a second latent vector of the i-th word in the reply content; fusing the first latent vector and the second latent vector to acquire a fusion latent vector of the i-th word in the reply content; and generating the i-th word in the reply content based on the fusion latent vector.

Optionally, prior to fusing the first latent vector and the second latent vector, the method further includes: inputting a fusion latent vector of an (i-1)th word in the reply content into the decoder, to make the decoder decode the fusion encoding vector based on the (i-1)th word.

In an embodiment of the present disclosure, a conversation content generation apparatus is provided, including: an acquiring circuitry, configured to acquire a current utterance entered by a user; a reading circuitry, configured to read a preset topic transfer graph and a preset target topic, wherein the topic transfer graph includes a plurality of nodes and connecting lines between the nodes, the plurality of nodes correspond to topics in one-to-one correspondence, each of the connecting lines points from a first node to a second node, a weight of the connecting line indicates probability of transferring from a topic corresponding to the first node to a topic corresponding to the second node, and the topic transfer graph includes a node corresponding to the target topic; a topic determining circuitry, configured to: determine a topic of reply content of the current utterance at least based on the current utterance, the topic transfer graph and the target topic, and record the topic of the reply content of the current utterance as a reply topic; and a generating circuitry, configured to generate the reply content of the current utterance at least based on the reply topic.

In an embodiment of the present disclosure, a storage medium having computer instructions stored therein is provided, wherein when the computer instructions are executed by a processor, the above conversation content generation method is performed.

In an embodiment of the present disclosure, a terminal which includes a memory and a processor is provided, wherein the memory has computer instructions stored therein, and when the processor executes the computer instructions, the above conversation content generation method is performed.

Embodiments of the present disclosure may provide following advantages.

In the embodiments of the present disclosure, the preset topic transfer graph includes a plurality of nodes and connecting lines between the nodes, wherein the plurality of nodes correspond to topics in one-to-one correspondence, the topic transfer graph includes a node corresponding to a target topic, each of the connecting lines points from a first node to a second node, and a weight of the connecting line indicates probability of transferring from a topic corresponding to the first node to a topic corresponding to the second node. After a current utterance input by a user is acquired, a reply topic is determined based on the current utterance, the topic transfer graph and the target topic, and reply content is generated based on the reply topic. As the current utterance can represent a current topic, the topic transfer graph includes the node corresponding to the target topic, and the connecting lines in the topic transfer graph represent transfer probabilities between topics, determining the current topic based on the current utterance, the topic transfer graph and the target topic can gradually guide a topic to the target topic, and the transfer of topic may be more natural and coherent by determining the reply topic based on the transfer probabilities.

Further, in the embodiments of the present disclosure, the transfer probability of the current topic is first calculated, and then it is determined whether the transfer probability is greater than the first preset threshold. If so, the reply topic is determined from the topic transfer graph, otherwise the current topic is used as the reply topic. Compared with a solution of directly determining the reply topic from the topic transfer graph, the above solution may avoid an incoherent conversation caused by directly determining the reply topic from the topic transfer graph when the current topic obviously differs from the topics in the topic transfer graph. In addition, when the transfer probability is lower than the first preset threshold, the current topic is used as the reply topic, which also makes the conversation more in-depth.

Further, in the embodiments of the present disclosure, both the knowledge graph and the reply topic are considered to generate the reply content, which is conducive to generating more informative and reasonable reply content.

Further, in the embodiments of the present disclosure, knowledge selection is performed based on the similarity between the reply topic and the target topic. The higher the similarity, the greater the proportion of the target specific knowledge in the target knowledge, and the smaller the proportion of the target common sense knowledge in the target knowledge. Such a solution is conducive to making the reply content closer to the target topic and improving efficiency of guiding to the target topic.

BRIEF DESCRIPTION OF THE DRAWINGS

FIG. 1 is a flow chart of a conversation content generation method according to an embodiment;

FIG. 2 is a flow chart of a method for constructing a topic transfer graph according to an embodiment;

FIG. 3 is a structural diagram of a topic planning model according to an embodiment;

FIG. 4 is a structural diagram of a response generation model according to an embodiment; and

FIG. 5 is a block diagram of a conversation content generation apparatus according to an embodiment.

DETAILED DESCRIPTION

As described in the background, there is an urgent need for a conversation content generation method where topics can be actively guided and dialogues can be naturally guided to target topics during human-computer conversation.

Specifically, existing human-computer dialogue systems can only passively respond to users' questions, but cannot actively guide a topic during conversation. For the existing human-computer dialogue systems, question-answering dialogue corpora are used as data sets to train end-to-end sequence generation models. The existing human-computer dialogue systems can only return a suitable output as a response based on a user's input, but cannot actively ask questions to the user, let alone naturally guide the entire conversation. In addition, traditional dialogue management models are usually built within a clear discourse system (i.e., search first, then ask, and finally end), and generally predefine a system action space, a user intention space, and dialogue body. However, in reality, user behaviors' changes are difficult to predict, and the system's response ability is quite limited, which leads to poor scalability of the existing dialogue systems.

However, in actual application scenarios, such as chit-chat dialogue, task-oriented dialogue, recommendation dialogue, and even question-answering dialogue, the form of human-computer interaction dialogue is more in the form of multi-round dialogue. For example, open-domain dialogues are oriented to open fields. How to enable the computer to generate multi-round open-domain dialogues with content and coherent topics to make its replies consistent, diverse and personalized, is one of essential tasks recognized by artificial intelligence. Therefore, for many practical applications, how to actively and naturally guide dialogues in the multi-round human-computer dialogue is crucial, for example, how to introduce promotion of a given commodity in small talk. Therefore, how to maintain coherence of the dialogue and naturally introduce a target topic is one of significant challenges of actively guiding the topic.

To solve the above technical problems, in the embodiments of the present disclosure, the preset topic transfer graph includes a plurality of nodes and connecting lines between the nodes, wherein the plurality of nodes correspond to topics in one-to-one correspondence, the topic transfer graph includes a node corresponding to a target topic, each of the connecting lines points from a first node to a second node, and a weight of the connecting line indicates probability of transferring from a topic corresponding to the first node to a topic corresponding to the second node. After a current utterance input by a user is acquired, a reply topic is determined based on the current utterance, the topic transfer graph and the target topic, and reply content is generated based on the reply topic. As the current utterance can represent a current topic, the topic transfer graph includes the node corresponding to the target topic, and the connecting lines in the topic transfer graph represent transfer probabilities between topics, determining the current topic based on the current utterance, the topic transfer graph and the target topic can gradually guide a topic to the target topic, and the transfer of the topic may be more natural and coherent by determining the reply topic based on the transfer probabilities.

In order to clarify the objects, characteristics and advantages of the disclosure, embodiments of present disclosure will be described in detail in conjunction with accompanying drawings.

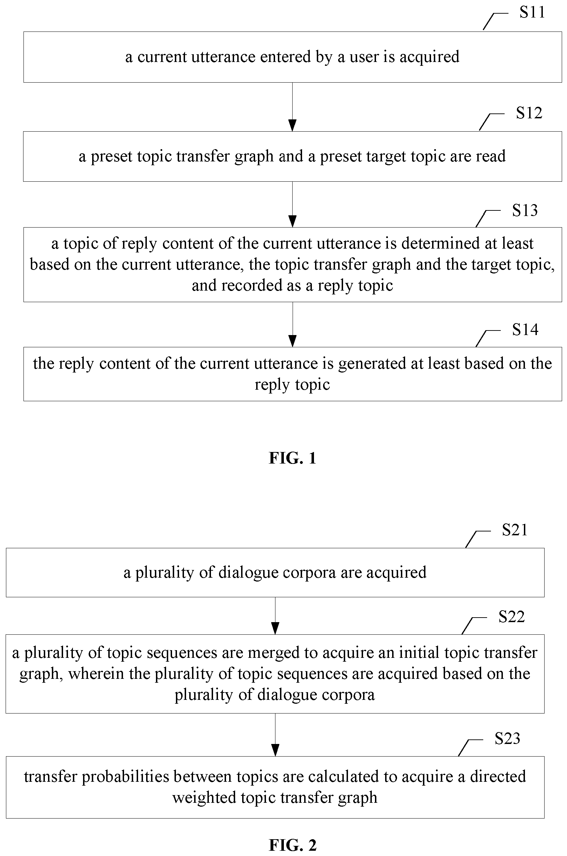

Referring to FIG. 1, FIG. 1 is a flow chart of a conversation content generation method according to an embodiment. The method may be applied to a terminal. The terminal may be various existing devices with data receiving and data processing capabilities, for example, it may be a mobile phone, a computer, a tablet computer, an Internet of Things (IoT) device, or a wearable device, which is not limited in the embodiments of the present disclosure. In other words, the terminal may be various appropriate devices with human-computer conversation functions. In the embodiments of the present disclosure, a user is a "person" who conducts human-computer conversation, and the terminal is a "machine" who conducts the human-computer conversation. Specifically, the method may include S11, S12, S13 and S14.

In S11, a current utterance entered by a user is acquired.

In S12, a preset topic transfer graph and a preset target topic are read.

In S13, a topic of reply content of the current utterance is determined at least based on the current utterance, the topic transfer graph and the target topic, and recorded as a reply topic.

In S14, the reply content of the current utterance is generated at least based on the reply topic.

It could be understood that, in some embodiments, the method may be implemented in a form of a software program which runs in a processor integrated in a chip or a chip module. Alternatively, the method may be implemented by hardware or by a combination of software and hardware.

In some embodiments, in S11, during a human-computer dialogue process, the current utterance input by the user is acquired. In a specific example, the current utterance input by the user may be voice or text, and the form of the current utterance is not limited in the embodiments of the present disclosure. The current utterance input by the user may be a question raised by the user, or the user's answer to reply content of a previous round, and content of the current utterance is not limited in the embodiments of the present disclosure.

In some embodiments, in S12, in response to the current utterance input by the user, the preset topic transfer graph and the preset target topic are read, and the reply content for the current utterance is generated through subsequent S13 and S14.

Specifically, the target topic is preset. More specifically, the target topic may be preset by a manager or an owner of the terminal, rather than by the user. In a specific example, the target topic may be promotion of a target commodity.

In some embodiments, the topic transfer graph includes a plurality of nodes and connecting lines between the nodes, the plurality of nodes correspond to topics in one-to-one correspondence, and the plurality of nodes include a node corresponding to the target topic. Each of the connecting lines points from a first node to a second node, and a weight of the connecting line indicates probability of transferring from a topic corresponding to the first node to a topic corresponding to the second node. That is, the connecting line may indicate a direction of topic transfer and the probability of topic transfer. It should be noted that the topics corresponding to the plurality of nodes in the topic transfer graph are different.

Referring to FIG. 2, FIG. 2 is a flow chart of a method for constructing a topic transfer graph according to an embodiment. The topic transfer graph and the construction method thereof are described below in a non-limiting manner in conjunction with FIG. 2. Specifically, the method may include S21, S22 and S23.

In S21, a plurality of dialogue corpora are acquired.

In S22, a plurality of topic sequences are merged to acquire an initial topic transfer graph, wherein the plurality of topic sequences are acquired based on the plurality of dialogue corpora.

In S23, transfer probabilities between topics are calculated to acquire a directed weighted topic transfer graph.

In some embodiments, in S21, each of the plurality of dialogue corpora includes a plurality of rounds of human-computer dialogue samples. Each of the plurality of rounds of human-computer dialogue samples has a pre-labeled first label that indicates a topic of the human-computer dialogue sample of the round. Further, each of the plurality of rounds of human-computer dialogue samples has a pre-labeled second label that indicates whether the topic of the human-computer dialogue sample of the round is the same as a topic of a next round of human-computer dialogue sample. It could be understood that in response to the topic of the current round being different from the topic of the next round, it is determined that a topic transfer has occurred.

In some embodiments, the plurality of dialogue corpora may be pre-collected or read from the outside. In a specific example, a plurality of initial dialogue corpora may be first acquired from an external database, for example, from an open source dataset.

Further, considering that the existing human-computer dialogue is usually a task-oriented dialogue, a question-answering dialogue, etc., coherence of each initial dialogue corpus needs to be improved. To this end, the plurality of initial dialogue corpora may be processed to acquire the plurality of dialogue corpora. Each dialogue corpus acquired after processing involves a plurality of topics, and adjacent topics have a sequential relation, that is, adjacent rounds of dialogues are coherent. In other words, adjacent rounds of topics are semantically coherent. Further, each topic corresponds to a plurality of rounds of continuous dialogues. Consequently, multi-round dialogue corpus can simulate a scenario in which topics are rich and varied and content of the dialogue is coherent during the human-computer dialogue process in actual applications.

In some embodiments, in S22, the plurality of topic sequences may be generated based on the plurality of dialogue corpora. Specifically, corresponding topic sequences are generated based on the first label and the second label of each dialogue corpus. Each topic sequence may include a plurality of topics. In some embodiments, if a number of topics included in a single topic sequence exceeds a third preset threshold, the topic sequence may be randomly truncated, and subsequent steps may be performed based on the truncated topic sequence. In a specific example, the third preset threshold may be 20, but is not limited to this.

Further, all topic sequences may be merged to acquire the initial topic transfer graph $g=(v, e)$, where $v$ is a set of nodes, $e$ is a set of connecting lines (i.e., edges), and connecting line $e=(vi, vj)$ indicates that there is a transfer relation from node $v_i$ to node $v_j$. In other words, the topic corresponding to node $v_i$ can be transferred to the topic corresponding to node $v_j$. It should be noted that there is a one-to-one correspondence between nodes and topics, and the topics corresponding to the nodes are different.

It should also be noted that in the embodiments of the present disclosure, the plurality of dialogue corpora include human-computer dialogue samples related to the target topic, and accordingly the topic transfer graph acquired also includes the node corresponding to the target topic.

In some embodiments, in S23, the transfer probabilities between topics are calculated, and the calculated transfer probabilities are used as weights of the connecting lines between the corresponding nodes, thereby acquiring a directed weighted topic transfer graph G. Each of the transfer probabilities is a conditional probability of transferring from the topic corresponding to the first node $v_i$ to the topic corresponding to the second node $v_j$. The first node $v_i$ is any node in the topic transfer graph, and the second node $v_j$ is any node connected to the first node $v_i$, where i and j are positive integers, and i is different from j.

Further, the topic transfer graph may be vectorized using a graph embedding algorithm to acquire the topic transfer matrix. Rows in the topic transfer matrix correspond to nodes in one-to-one correspondence, that is, each row is a vector representation of one node (that is, one topic), a number of the rows is a number of the nodes, and a number of columns is a dimension of the node vector. In some embodiments, the topic transfer graph may be saved and used in a form of topic transfer matrix. Specifically, the topic transfer graph represents a sequential relation between different topics in the conversation process. A trained node vector (that is, the topic transfer matrix) reflects abstract network structure characteristics of the topic transfer graph.

In a specific example, a Node2vec algorithm may be used to vectorize the topic transfer graph. The Node2vec algorithm makes full use of information of a random walk sequence in a graph structure to convert nodes in the graph into low-dimensional dense entity vectors. In specific implementation of the Node2vec algorithm, first, a large number of random walk sequences $(v_{i-w}, v_{i-w+1}, ..., v_{i-1}, v_{i+1}, v_{i+2}, v_{i+w})$ with a central node of $v_i$ and a window size of $2 \times w$ are sampled on a network through a certain transfer probability, where w is a positive integer. Afterward, node pairs in each local window in the random walk sequences are probabilistically modeled, a probability of generating the nodes on both sides by the central node $v_i$ is calculated, a likelihood probability of the random walk sequences is maximized, and parameters are learned using stochastic gradient descent, so as to finally acquire the topic transfer matrix. In other embodiments, other graph embedding algorithms may be used to vectorize the topic transfer graph, such as graph neural networks, graph convolutional networks, etc., which is not limited in the embodiments.

From above, in the embodiments of the present disclosure, by constructing the topic sequences from the plurality of dialogue corpora, the topics in the topic sequences are correlated. In addition, a degree of correlation between topics is constructed based on a calculation method for edge weights of conditional probability. The correlation refers to topic transfer between different adjacent topics in the topic sequences, and the degree of correlation refers to the probability of topic transfer. Finally, vector embedding representation of the topic transfer graph is acquired based on the graph embedding algorithm, thereby further enhancing topic planning ability of the algorithm.

Continuing to refer to FIG. 1, in some embodiments, in S13, the topic of the reply content of the current utterance is determined based on the current utterance, the topic transfer graph and the target topic, and recorded as the reply topic.

In some embodiments, the current utterance, the topic transfer graph and the target topic may be input into a pre-trained model to acquire a topic output by a model, and the topic output by the model may be directly used as the reply topic. More specifically, a semantic feature vector and a topic transfer matrix may be input into the pre-trained model to acquire the reply topic output by the model. The semantic feature vector is used to characterize semantic information of the current utterance and the target topic.

Inventors of the present disclosure considered that there should be coherence between the reply topic and the current topic. Considering that the nodes in the topic transfer graph are limited, that is, the topics represented by the topic transfer graph are also limited, in a case that the current topic and the topics in the topic transfer graph are greatly different, if the reply topic is determined directly from the topic transfer graph, the topic transfer will inevitably occur, and accordingly the coherence of the topic transfer cannot be guaranteed.

To this end, in the embodiments of the present disclosure, it is first determined whether to transfer the topic. If it is determined that the topic is transferred, the reply topic is determined from the topic transfer graph. If it is determined that the topic is not transferred, the current topic is directly used as the reply topic. In some embodiments, the current topic may be determined based on the current utterance. The current topic may be the same as the last reply topic or different from the last reply topic. The transfer of the topic means that the reply topic is different from the current topic.

Specifically, the current topic may be the last reply topic, i.e., a previous reply topic, that is, a topic of reply content to a last utterance input by the user. In other words, the last reply topic is the topic of the last reply content. If the current utterance of the user is a reply to the last reply topic, the current topic is the last reply topic. In addition, if the user actively changes the topic, that is, the current utterance input by the user is not a reply to the last reply topic, the current topic may be different from the last reply topic.

In some embodiments, the transfer probability of the current topic is calculated, and then it is determined whether the transfer probability is greater than a first preset threshold. In response to the transfer probability being higher than the first preset threshold, it is determined that the topic is transferred, and in response to the transfer probability being lower than or equal to the first preset threshold, it is determined that the topic is not transferred. The first preset threshold may be preset, for example, it is 0.5, but it is not limited to this. It should be noted that the topic transfer means that the reply topic is different from the current topic.

In some embodiments, similarities between the current topic and the topics corresponding to each node in the topic transfer graph may be calculated. In response to the similarities between the current topic and the topics corresponding to each node in the topic transfer graph being less than or equal to a second preset threshold, it is determined that the transfer probability is lower than the first preset threshold. In some embodiments, feature distances between the semantic feature vector of the current topic and the vectors of each node in the topic transfer matrix may be calculated respectively, and the feature distances are used as the similarities. In response to determining that the transfer probability is lower than the first preset threshold, the semantic feature vector of the current topic, the semantic feature vector of the target topic, and the topic transfer matrix may be input into the pre-trained model to acquire the current topic output by the model.

Such a solution can not only improve coherence of conversation, but also take the user's intention into consideration. Specifically, when the user actively changes the topic and the topic is significantly different from the topics in the topic transfer graph, the current topic can be continued.

In some embodiments, a pre-trained topic planning model may be used to determine whether to change the topic and the reply topic when the topic is transferred.

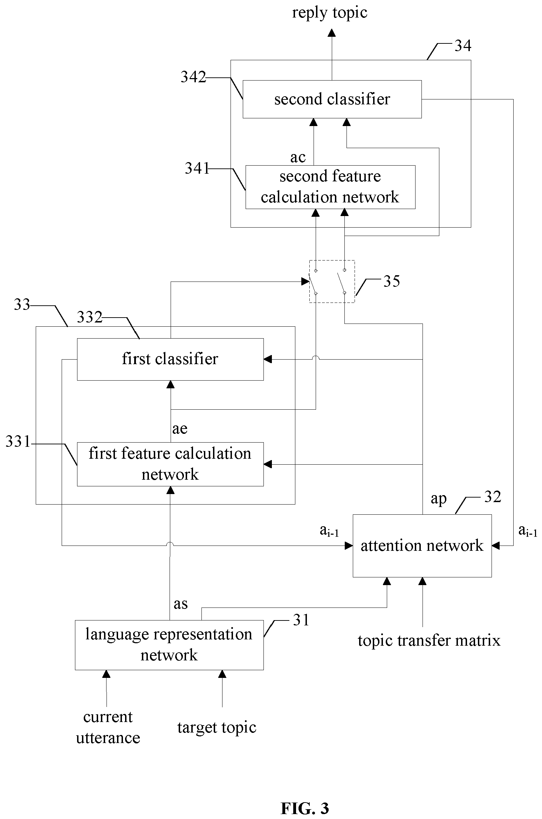

Referring to FIG. 3, FIG. 3 is a structural diagram of a topic planning model according to an embodiment. As shown in FIG. 3, the topic planning model may include a language representation network 31, an attention network 32, a topic evaluation network 33 and a topic guidance network 34. The topic evaluation network 33 may include a first feature calculation network 331 and a first classifier 332, and the topic guidance network 34 may include a second feature calculation network 341 and a second classifier 342.

In some embodiments, the current utterance and the target topic may be input into the language representation network 31 to acquire an output semantic feature vector as that includes a first semantic feature vector and a second semantic feature vector. The first semantic feature vector represents semantic information of the current utterance, and the second semantic feature vector represents semantic information of the target topic. In a specific example, the language representation network 31 may be a Bidirectional Encoder Representation from Transformers (BERT) network. The BERT network can uniformly model a lexical structure, a grammatical structure, and semantic information in training data, and acquire a low-dimensional dense word vector in the semantic space, which significantly enhances general semantic representation capability.

Further, the semantic feature vector as and the topic transfer matrix may be input into the attention network 32, and the attention network 32 may calculate the semantic feature vector as and the topic transfer matrix based on an attention mechanism to acquire an attention vector ap.

As the attention network 32 uses the attention mechanism to calculate the semantic feature vector as and the topic transfer matrix, the attention network 32 can calculate contribution of each topic in the topic transfer graph to the topic to which the current utterance belongs (i.e., the current topic). Further, features in the text mined by the language representation network 31 and network structure features mined by the attention network 32 can jointly express features of the current topic.

As shown in FIG. 3, the vector representation $a_{i-1}$ of the last reply topic may be input into the attention network 32. That is, the attention network 32 nay calculate the attention vector ap based on the vector representation $a_{i-1}$ of the last reply topic, the semantic feature vector as and the topic transfer matrix. If the last reply topic is determined by the topic guidance network 34, the vector representation $a_{i-1}$ acquired in the second classifier 342 may be input into the attention network 32. If the last reply topic is not determined by the topic guidance network 34, the vector representation $a_{i-1}$ acquired in the first classifier 332 may be input into the attention network 32. It should be noted that the vector representation $a_{i-1}$ may refer to an input of a softmax function. The attention vector is determined by considering the vector representation $a_{i-1}$ of the last reply topic, so that the amount of information included in the attention vector is enriched, making the attention vector include information about the current topic, the last topic and the topic transfer matrix, which enables more accurate calculation of the transfer probability and determination of the reply topic later.

Further, the attention vector ap and the semantic feature vector as may be input into the first feature calculation network 331 to acquire the topic evaluation vector ae output by the first feature calculation network 331. Besides, the semantic feature vector as and the attention vector ap are input into the first feature calculation network 331, which is conducive to improving performance of feature representation of the topic evaluation vector ae. Afterward, the first classifier 332 is used to calculate a second classification result based on the topic evaluation vector ae to evaluate the transfer probability of topic, where the first classifier 332 may use the softmax function to calculate the transfer probability of topic.

In a first specific example, the topic evaluation vector ae output by the first feature calculation network 331 may be directly input into the first classifier 332 to acquire the transfer probability output by the first classifier 332.

In a second specific example, the first enhancement factor fe may be calculated first, then a product of the topic evaluation vector ae and the first enhancement factor fe may be calculated, and the topic evaluation vector ae may be updated based on the calculated product. In other words, the product of the topic evaluation vector ae and the first enhancement factor fe may be recorded as a topic enhancement evaluation vector he to be input into the first classifier 332 to acquire the transfer probability of topic output by the first classifier 332.

The first enhancement factor may be calculated using the following formula:

$$fe = \tanh\left(we \times ae + ve \times ap + be\right),$$

where fe is the first enhancement factor, we is a preset first weight matrix, ae is the topic evaluation vector, ve is a preset second weight matrix, ap is the attention vector, and be is a preset first bias vector for characterizing disturbance.

In a third specific example, the topic evaluation vector ae and the attention vector ap may be fused to acquire a first fusion vector. For example, the topic guidance vector ae and the attention vector ap may be merged to acquire the first fusion vector. Alternatively, the topic enhancement evaluation vector he and the attention vector ap may be fused to acquire the first fusion vector. Further, the transfer probability of topic may be calculated based on the first fusion vector. Considering that some information may be lost in a feature extraction process, the topic evaluation vector ae and the attention vector ap (that is, the input of the first feature calculation network 331) are first fused, and then the transfer probability of topic is calculated. Such a solution is conducive to enriching information input to the first classifier 332, thereby improving accuracy of the transfer probability of topic.

Further, if the transfer probability output by the first classifier 332 is lower than or equal to the first preset threshold, the current topic is used as the reply topic. If the transfer probability is higher than the first preset threshold, the attention vector ap and the topic evaluation vector ae are input into the topic guidance network 34.

As shown in FIG. 3, if the transfer probability output by the first classifier 332 is higher than the first preset threshold, a switch 35 is turned on, that is, the topic evaluation vector ae and the attention vector ap are input into the topic guidance network 34 to determine the reply topic from the topic transfer graph. More specifically, the topic evaluation vector ae and the attention vector ap are input into the second feature calculation network 341. If the transfer probability output by the first classifier 332 is lower than or equal to the first preset threshold, the switch 35 is turned off, that is, it is unnecessary to use the topic guidance network 34 to determine the reply topic, and the current topic is directly used as the reply topic.

Specifically, if the transfer probability output by the first classifier 332 is higher than the first preset threshold, the topic evaluation vector ae and the attention vector ap are input into the second feature calculation network 341 which then calculates the topic guidance vector ac based on the topic evaluation vector ae and the attention vector ap. Further, the second classifier 342 may determine the reply topic based on the topic evaluation vector ae and the attention vector ap. In some embodiments, any of the following methods may be used to determine the reply topic.

In method 1, the topic evaluation vector ac is directly input into the second classifier 342, to make the second classifier 342 determine the reply topic merely based on the topic evaluation vector ac.

In method 2, a second enhancement factor is calculated first, then a product of the topic guidance vector ac and a second enhancement factor fc is calculated, and the topic guidance vector ac is updated based on the calculated product. In other words, the product of the topic guidance vector ac and the second enhancement factor fc is recorded as a topic enhancement guidance vector hc to be input into the second classifier 342 to acquire the reply topic output by the second classifier 342.

The second enhancement factor may be calculated using the following formula:

$$fc = sigmoid\left(wc \times he + vc \times ap + bc\right),$$

where fc is the second enhancement factor, wc is a preset third weight matrix, he is the topic guidance vector, vc is a preset fourth weight matrix, ap is the attention vector, and bc is a preset second bias vector for characterizing disturbance.

In method 3, the topic guidance vector ac and the attention vector ap are fused to acquire a second fusion vector, and then the second fusion vector is input into the second classifier 342. That is, as shown in FIG. 3, the topic guidance vector ac and the attention vector ap are input into the second classifier 342 which may first fuse the topic guidance vector ac and the attention vector ap, then calculate the second fusion vector to acquire a probability of each topic in the topic transfer graph being the reply topic, and use the one with the highest probability as the reply topic. It should be noted that the topic enhancement guidance vector hc and the attention vector ap may be fused to acquire the second fusion vector.

It should be noted that the second classifier may use the softmax function to calculate the transfer probability of each topic in the topic transfer graph.

From above, the topic planning model takes the current utterance, the target topic and the topic transfer graph as input, and determines the reply topic based on the topic evaluation network 33 and the topic guidance network 34. The attention network 32 is configured to calculate contribution of network structure characteristics of each node in the topic transfer graph to the topic to which the current utterance belongs. The topic evaluation network 33 enhances and enriches the vector representation, and calculates the transfer probability of topic to evaluate whether to transfer the topic. The topic guidance network 34 enhances a vector of a task, and if the topic transfers, predicts the reply topic through multi-task classification.

It should be noted that, in a process of training the topic planning model, the topic evaluation network 33 and the topic guidance network 34 may be trained by multi-task joint learning.

Specifically, the topic evaluation network and the topic guidance network may be trained simultaneously using sample utterances. The sample utterances may have first supervision information and second supervision information, where the first supervision information indicates whether to change the topic when replying to the sample utterances, and the second supervision information is a target sample topic for replying the sample utterances. The first supervision information is used to calculate a loss of the topic evaluation network, and the second supervision information is used to calculate a loss of the topic guidance network.

More specifically, a total loss of training the topic planning model may be calculated based on the loss of the topic evaluation network and the loss of the topic guidance network. For example, the total loss of training the topic planning model may be calculated by weighting the loss of the topic evaluation network and the loss of the topic guidance network.

Further, if a prediction result of the topic guidance network is not to transfer the topic (that is, using the current topic as the reply topic), the loss of the topic guidance network may be regarded as 0. That is, merely parameters of the topic evaluation network are updated based on the loss of the topic evaluation network, and parameters of the topic guidance network are not updated at this time. If the prediction result of the topic guidance network is to transfer the topic, the loss of the topic guidance network may be calculated based on a prediction result of the topic guidance network and the second supervision information. Further, the total loss is calculated based on the loss of the topic evaluation network and the loss of the topic guidance network, and the topic evaluation network and the topic guidance network are updated simultaneously based on the total loss until a pre-defined training stop condition is met.

The topic planning model is built by modeling an intrinsic logical relation between two subtasks of topic evaluation (i.e., determining whether to transfer the topic) and topic guidance (i.e., determining the reply topic from the topic transfer graph), and a threshold gated loop mechanism is used to improve performance of network feature representation (i.e., when the transfer probability is greater than the first preset threshold, the attention feature and the target evaluation vector are input into the target guidance network), which enables the topic planning model to achieve a coherent transfer of topics while maintaining a certain depth of the topic and taking into account the user's intentions and interests.

Continuing to refer to FIG. 1, in some embodiments, in S 14, the reply content of the current utterance may be generated based on the reply topic.

In the embodiments of the present disclosure, a preset knowledge graph may be read. The knowledge graph may include: common sense knowledge and/or specific knowledge. The specific knowledge may refer to knowledge in a specific field that is determined by the target topic. For example, when the target topic is to promote a target commodity, the specific field is an e-commerce field.

More specifically, the common sense knowledge usually covers a wide range of fields, can provide relevant background knowledge for open domain text generation to improve the amount of information of generated text, and plays a guiding role in understanding the current utterance input by the user and generating the reply content. The common sense knowledge is a series of information that covers the most extensive human knowledge and can help humans to understand various affairs in every day.

In addition, a knowledge graph corresponding to the specific knowledge may be constructed, or the specific knowledge may be added to the knowledge graph of the common sense knowledge. In some embodiments, a first-order graph relation may be established with entities and values in the mined triple knowledge as nodes and attributes as edges. In addition, a second-order relation may be established between two entities with the same attributes and values.

In some embodiments, the knowledge graph may include the common sense knowledge and the specific knowledge. Target knowledge may be determined from the knowledge graph based on the reply topic, and the reply content may be generated at least based on the target knowledge and the reply topic. For example, the reply content may be generated based on the target knowledge, the reply topic and a dialogue history. The dialogue history refers to a dialogue history between the terminal and the user.

Specifically, target common sense knowledge may be selected from the common sense knowledge based on the reply topic, and target specific knowledge may be selected from the specific knowledge based on the reply topic. It should be noted that in the embodiments of the present disclosure, an attention mechanism may be used to implement knowledge selection.

In some embodiments, a similarity between the reply topic and the target topic may be calculated. It could be understood that the higher the similarity between the reply topic and the target topic, the closer the reply topic and the target topic are. Further, the common sense knowledge and the specific knowledge may be selected based on the similarity. Specifically, the higher the similarity, the smaller the proportion of the target common sense knowledge in the target knowledge, and the greater the proportion of the target specific knowledge in the target knowledge. Such a solution is conducive to making the reply content closer to the target topic and improving efficiency of guiding to the target topic.

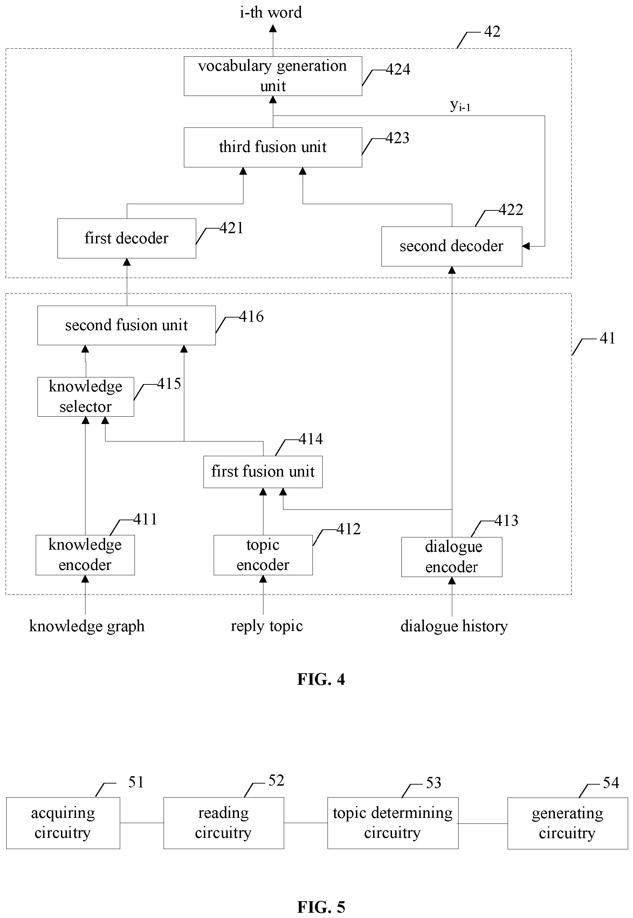

Referring to FIG. 4, FIG. 4 is a structural diagram of a response generation model according to an embodiment. As shown in FIG. 4, the response generation model may include an encoding network 41 and a decoding network 42. Specifically, the encoding network 41 may include an encoder, a knowledge selector 415 and a fusion unit. More specifically, the encoder may include a knowledge encoder 411, a topic encoder 412 and a dialogue encoder 413. The fusion unit may include a first fusion unit 414 and a second fusion unit 416.

It should be noted that the knowledge encoder, the topic encoder and the dialogue encoder may be various existing appropriate encoders, for example, a bidirectional gated recurrent unit, but is not limited thereto. The knowledge encoder, the topic encoder and the dialogue encoder may be different encoders or different encoding units of a same encoder.

The knowledge encoder 411 may be configured to encode the knowledge graph to acquire an initial knowledge encoding vector, the topic encoder 412 may be configured to encode the reply topic to acquire a topic encoding vector, and the dialogue encoder 413 may be configured to encode the dialogue history to acquire a dialogue encoding vector.

Further, the topic coding vector and the dialogue coding vector may be input into the first fusion unit 414 to acquire a content coding vector output by the first fusion unit 414. The content coding vector may be acquired by fusing the topic coding vector and the dialogue coding vector via the first fusion unit 414. For example, the content coding vector may be acquired by calculating the topic coding vector and the dialogue coding vector using a Concatenate function and/or a Normal function.

Further, the content encoding vector and the initial knowledge encoding vector may be input into the knowledge selector 415, and the knowledge selector 415 may calculate a target knowledge encoding vector based on the initial knowledge encoding vector and the content encoding vector. More specifically, the knowledge selector 415 may calculate the initial knowledge encoding vector and the content encoding vector based on the attention mechanism to acquire the target knowledge encoding vector. Consequently, knowledge information required for reply is selected from the knowledge graph through the attention mechanism and introduced into the decoding network 42.

Further, the target knowledge coding vector and the content coding vector may be input into the second fusion unit 416 to acquire a fusion coding vector output by the second fusion unit 416. In some embodiments, the target knowledge coding vector and the content coding vector may be calculated by using the Concatenate function and/or the Normal function.

Further, the fusion coding vector and the dialogue coding vector may be input into the decoding network 42.

Specifically, the decoding network 42 may include a first decoder 421, a second decoder 422, a third fusion unit 423 and a vocabulary generation unit 424.

In some embodiments, the fusion coding vector may be input into the first decoder 421 for decoding to acquire a first latent vector of an i-th word in the reply content, and the dialogue coding vector may be input into the second decoder 422 for decoding to acquire a second latent vector of the i-th word in the reply content, where i is a positive integer. More specifically, the first decoder 421 and the second decoder 422 may be different decoders or different decoding units of a same decoder, which is not limited in the embodiments. It should be noted that the latent vector (also known as a latent state) is used as an expression form to describe a word, as the terminal cannot directly recognize the word, but can recognize the latent vector, and can understand the meaning of the word based on the latent vector.

Further, the first latent vector and the second latent vector of the i-th word may be input into the third fusion unit 423 for fusing to acquire a fusion latent vector of the i-th word in the reply content.

Further, the fusion latent vector of the i-th word may be input into the vocabulary generation unit 424 which determines the i-th word in the reply content based on the fusion latent vector of the i-th word.

In some embodiments, a fusion latent vector of an (i-1)th word in the reply content may also be input into the first decoder and/or the second decoder, to make the decoders decode the fusion coding vector according to the (i-1)th word, thereby improving decoding accuracy of the i-th word.

In the process of training the reply generation model shown in FIG. 4, a loss of the model may be calculated using the following formula:

$$L(\theta) = \alpha \times L_{KL}(\theta) + \beta \times L_{BOW}(\theta) + L_{NLL}(\theta),$$

where $L(\theta)$ is a total loss, $L_{KL}(\theta)$ is a loss of the knowledge selector, $L_{BOW}(\theta)$ is a first loss, $L_{NLL}(\theta)$ is a second loss, $\alpha$ is a preset first weight value, $\beta$ is a preset second weight value. The first loss is calculated based on a Negative Loglikelihood (NLL) loss function, and the second loss is calculated based on the Bag-Of-Words (BOW) loss function. Labels used to calculate the losses include pre-labeled standard response content and predicted response content output by the response generation model for samples during the training process.

More specifically, the label used to calculate the loss of the knowledge selector is the pre-labeled standard response content Y. Therefore, the knowledge selection module 416 may be trained by maximizing a posterior probability. During the training process, posterior knowledge information in the standard response Y is used to guide the model to select prior knowledge, that is, a prior knowledge distribution is made to fit a posterior knowledge distribution. The divergence of two vectors corresponding to the two distributions may be used as the loss $L_{KL}$ of the knowledge selector which is used to calculate the total loss.

In addition, to avoid serious information loss in calculation of the posterior knowledge distribution, the idea of autoencoding is utilized. During the training process, the posterior knowledge distribution calculated based on the standard reply content is enabled to decode the standard reply content. That is, the posterior knowledge distribution is used to predict each word of the standard reply, and a BOW loss of a prediction result is also taken as part of the total $L_{BOW}$.

With the above solution, the reply content is generated based on the knowledge graph, the dialogue history and the reply topic, which provides a knowledgeable and coherent reply for the reply topic.

From above, in the embodiments of the present disclosure, it is presented how to plan topics based on a reply generation framework of the knowledge graph and the topic transfer graph, thereby further assisting in management of conversation topics and generation of more informative, reasonable and coherent replies. On one hand, planning of high-level topic sequences are realized, and on the other hand, rich and in-depth conversations are generated based on a reply topic. In addition, the above method requires less training data, solves a large number of cold start problems existing in the prior art, reduces annotation requirements and cleaning cost of conversation materials, and improves training efficiency of models.

Referring to FIG. 5, FIG. 5 is a block diagram of a conversation content generation apparatus according to an embodiment. The apparatus includes an acquiring circuitry 51, a reading circuitry 52, a topic determining circuitry 53, and a generating circuitry 54.

The acquiring circuitry 51 is configured to acquire a current utterance entered by a user.

The reading circuitry 52 is configured to read a preset topic transfer graph and a preset target topic, wherein the topic transfer graph includes a plurality of nodes and connecting lines between the nodes, the plurality of nodes correspond to topics in one-to-one correspondence, each of the connecting lines points from a first node to a second node, a weight of the connecting line indicates probability of transferring from a topic corresponding to the first node to a topic corresponding to the second node, and the topic transfer graph includes a node corresponding to the target topic.

The topic determining circuitry 53 is configured to: determine a topic of reply content of the current utterance at least based on the current utterance, the topic transfer graph and the target topic, and record the topic of the reply content of the current utterance as a reply topic.

The generating circuitry 54 is configured to generate the reply content of the current utterance at least based on the reply topic.

In some embodiments, the above apparatus may correspond to a chip with a data processing function in a terminal, or to a chip module with a data processing function in a terminal, or to a terminal.

More details of working principles, working modes and advantages of the apparatus as illustrated in FIG. 5 can be referred to related descriptions in FIG. 1 to FIG. 4, and are not repeated here.

In an embodiment of the present disclosure, a storage medium having computer instructions stored therein is provided, wherein when the computer instructions are executed, steps of the above method are performed. In some embodiments, the storage medium may include a ROM, a RAM, a magnetic disk or an optical disk. In some embodiments, the storage medium may include a non-volatile or a non-transitory memory.

In an embodiment of the present disclosure, a terminal including a memory and a processor is provided, wherein the memory has computer instructions stored therein, and when the processor executes the computer instructions, steps of the above method are performed. The terminal may be a mobile phone, a computing device, a computer or an IoT apparatus. In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a Read-Only Memory (ROM), a Programmable ROM (PROM), an Erasable PROM (EPROM), an electrically Erasable EPROM (EEPROM), or a flash memory. The volatile memory may be a Random Access Memory (RAM) which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR-RAM).

The above embodiments may be implemented in whole or in part by software, hardware, firmware or any combination thereof. When implemented in software, the above embodiments may be implemented in whole or in part in the form of a computer program product. The computer program product includes one or more computer instructions or computer programs. The procedures or functions according to the embodiments of the present disclosure are wholly or partially generated when the computer instructions or the computer programs are loaded or executed on a computer. The computer may be a general-purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website, computer, server or data center to another website, computer, server or data center by wire or wireless.

In the above embodiments of the present disclosure, it should be understood that the disclosed method, device and system may be implemented in other ways. For example, the above device embodiments are merely illustrative, and for example, division of units is merely one logical division, and other divisions may be realized in practice, for example, a plurality of units or components may be combined or integrated into another system, or some features may be omitted, or not executed. The units described as separate parts may or may not be physically separate, and parts shown as units may or may not be physical units, that is, may be disposed in one place, or may be distributed on a plurality of network units. Some or all of the units can be selected according to practical requirements to achieve the purpose of the solutions of the embodiments.

In addition, functional units in the embodiments of the present disclosure may be integrated in one processing unit, or each unit may be physically separate, or two or more units may be integrated in one unit. The integrated units can be realized in a form of hardware, or in a form of hardware plus a software functional unit. For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

It should be understood that the term "and/or" in the present disclosure is merely an association relationship describing associated objects, indicating that there can be three types of relationships, for example, A and/or B can represent "A exists only, both A and B exist, B exists only. In addition, the character "/" in the present disclosure represents that the former and latter associated objects have an "or" relationship.

The "plurality" in the embodiments of the present disclosure refers to two or more.

The descriptions of the first, second, etc. in the embodiments of the present disclosure are merely for illustrating and differentiating the objects, and do not represent the order or the particular limitation of the number of devices in the embodiments of the present disclosure, which do not constitute any limitation to the embodiments of the present disclosure.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A conversation content generation method, **characterized by** comprising:

   acquiring a current utterance entered by a user;
   reading a preset topic transfer graph and a preset target topic, wherein the topic transfer graph comprises a plurality of nodes and connecting lines between the nodes, the plurality of nodes correspond to topics in one-to-one correspondence, each of the connecting lines points from a first node to a second node, a weight of the connecting line indicates probability of transferring from a topic corresponding to the first node to a topic corresponding to the second node, and the topic transfer graph comprises a node corresponding to the target topic;
   determining a topic of reply content of the current utterance at least based on the current utterance, the topic transfer graph and the target topic, and recording the topic of the reply content of the current utterance as a reply topic; and
   generating the reply content of the current utterance at least based on the reply topic.

2. The method according to claim 1, wherein a method for constructing the topic transfer graph comprises:

acquiring a plurality of dialogue corpora, wherein each of the plurality of dialogue corpora comprises a plurality of rounds of human-computer dialogue samples, each of the plurality of rounds of human-computer dialogue samples has prelabeled first label and second label, the first label indicates a topic of the human-computer dialogue sample of the round, and the second label indicates whether the topic of the human-computer dialogue sample of the round is the same as a topic of a next round of human-computer dialogue sample; and

generating the topic transfer graph based on the plurality of dialogue corpora.

3. The method according to claim 1, wherein said determining the topic of the reply content of the current utterance at least based on the current utterance, the topic transfer graph and the target topic comprises:

calculating a transfer probability of a current topic, wherein the current topic is a last reply topic or is determined based on the current utterance; and

determining whether the transfer probability is greater than a first preset threshold, determining the reply topic from the topic transfer graph in response to the transfer probability being higher than the first preset threshold, and using the current topic as the reply topic in response to the transfer probability being lower than or equal to the first preset threshold.

4. The method according to claim 3, wherein said determining whether the transfer probability is greater than the first preset threshold comprises:
in response to similarities between the current topic and topics corresponding to each node in the topic transfer graph being less than or equal to a second preset threshold, determining that the transfer probability is lower than the first preset threshold.

5. The method according to claim 3, wherein the transfer probability of the current topic is calculated by a pre-trained topic planning model, the topic planning model comprises a language representation network, an attention network, a first feature calculation network and a first classifier, and said calculating the transfer probability of the current topic comprises:

extracting semantic information of the current utterance and a target utterance using the language representation network to acquire a semantic feature vector;
calculating an attention vector using the attention network based on the semantic feature vector and a topic transfer matrix, wherein the topic transfer matrix is acquired by vectorizing the topic transfer graph using a graph embedding algorithm;
calculating a topic evaluation vector using the first feature calculation network based on the attention vector and the semantic feature vector; and
calculating the transfer probability using the first classifier based on the topic evaluation vector.

6. The method according to claim 5, wherein said calculating the transfer probability based on the topic evaluation vector comprises:

fusing the topic evaluation vector and the attention vector to acquire a first fusion vector; and
calculating the transfer probability based on the first fusion vector.

7. The method according to claim 5, wherein prior to calculating the transfer probability based on the topic evaluation vector, the method further comprises:

calculating a product of the topic evaluation vector and a first enhancement factor, and updating the topic evaluation vector based on the product;
wherein the first enhancement factor is calculated using the following formula:

$$fe = \tanh\left(we \times ae + ve \times ap + be\right)$$

where $fe$ is the first enhancement factor, $we$ is a preset first weight matrix, $ae$ is the topic evaluation vector, $ve$ is a preset second weight matrix, $ap$ is the attention vector, and $be$ is a preset first bias vector for characterizing disturbance.

8. The method according to claim 5, wherein the topic planning model further comprises a second feature calculation network and a second classifier, and said selecting the reply topic from the topic transfer graph comprises:

calculating a topic guidance vector using the second feature calculation network based on the topic evaluation vector and the attention vector; and
determining the reply topic using the second classifier based on the topic guidance vector.

9. The method according to claim 8, wherein said determining the reply topic based on the topic guidance vector comprises:

fusing the topic guidance vector and the attention vector to acquire a second fusion vector; and

determining the reply topic based on the second fusion vector.

10. The method according to claim 8, wherein prior to determining the reply topic based on the topic guidance vector, the method further comprises:

calculating a product of the topic guidance vector and a second enhancement factor, and updating the topic guidance vector based on the product;

wherein the second enhancement factor is calculated using the following formula:

$$fc = sigmoid\left(wc \times he + vc \times ap + bc\right),$$

where $fc$ is the second enhancement factor, $wc$ is a preset third weight matrix, $he$ is the topic guidance vector, $vc$ is a preset fourth weight matrix, $ap$ is the attention vector, and $bc$ is a preset second bias vector for characterizing disturbance.

11. The method according to claim 1, wherein said generating the reply content of the current utterance at least based on the reply topic comprises:

reading a preset knowledge graph, wherein the knowledge graph comprises common sense knowledge and/or specific knowledge, the specific knowledge refers to knowledge in a specific field, and the specific field is determined by the target topic;

determining target knowledge from the knowledge graph based on the reply topic; and

generating the reply content based on the target knowledge and the reply topic.

12. The method according to claim 11, wherein the knowledge graph comprises the common sense knowledge and the specific knowledge, the target knowledge comprises target common sense knowledge and target specific knowledge, and said determining the target knowledge from the knowledge graph based on the reply topic comprises:

calculating a similarity between the reply topic and the target topic; and

selecting the common sense knowledge and the specific knowledge based on the similarity to acquire the target knowledge, wherein the higher the similarity, the greater the proportion of the target specific knowledge in the target knowledge, and the smaller the proportion of the target common sense knowledge in the target knowledge.

13. The method according to claim 11, wherein the reply content is calculated by a pre-trained reply generation model, the reply generation model comprises an encoder, a knowledge selector and a decoder, and said generating the reply content of the current utterance at least based on the reply topic comprises:

calculating a target knowledge encoding vector using the knowledge selector based on an initial knowledge encoding vector and a content encoding vector;

fusing the target knowledge encoding vector and the content encoding vector to acquire a fusion encoding vector; and

generating the reply content using the decoder at least based on the fusion encoding vector;

wherein the initial knowledge encoding vector is acquired by encoding the knowledge graph using the encoder, the content encoding vector comprises a topic encoding vector and/or a dialogue encoding vector, the topic encoding vector is acquired by encoding the reply topic using the encoder, and the dialogue encoding vector is acquired by encoding a dialogue history with the user using the encoder.

14. The method according to claim 13, wherein said generating the reply content at least based on the fusion encoding vector comprises:

decoding the fusion encoding vector to acquire a first latent vector of an i-th word in the reply content, wherein i is a positive integer;

decoding the dialogue encoding vector to acquire a second latent vector of the i-th word in the reply content;

fusing the first latent vector and the second latent vector to acquire a fusion latent vector of the i-th word in the reply content; and

generating the i-th word in the reply content based on the fusion latent vector.

15. The method according to claim 14, wherein prior to fusing the first latent vector and the second latent vector, the method further comprises:

inputting a fusion latent vector of an (i-1)th word in the reply content into the decoder, to make the decoder decode the fusion encoding vector based on the (i-1)th word.

16. A conversation content generation apparatus, **characterized by** comprising:

an acquiring circuitry, configured to acquire a current utterance entered by a user;

a reading circuitry, configured to read a preset topic transfer graph and a preset target topic, wherein the topic transfer graph comprises a plurality of nodes and connecting lines between the nodes, the plurality of nodes correspond to topics in one-to-one correspondence, each of the connecting lines points from a first node to a second node, a weight of the connecting line indicates probability of transferring from a topic corresponding to the first node to a topic corresponding to the second node, and the topic transfer graph comprises a node corresponding to the target topic;

a topic determining circuitry, configured to: determine a topic of reply content of the current utterance at least based on the current utterance, the topic transfer graph and the target topic, and record the topic of the reply content of the current utterance as a reply topic; and

a generating circuitry, configured to generate the reply content of the current utterance at least based on the reply topic.

17. A storage medium having computer instructions stored therein, **characterized in that** when the computer instructions are executed by a processor, the method of any one of claims 1 to 15 is performed.

18. A terminal, comprising a memory and a processor, **characterized in that** the memory has computer instructions stored therein, and when the processor executes the computer instructions, the method of any one of claims 1 to 15 is performed.

S11

a current utterance entered by a user is acquired

S12

a preset topic transfer graph and a preset target topic are read

S13

a topic of reply content of the current utterance is determined at least based on the current utterance, the topic transfer graph and the target topic, and recorded as a reply topic

S14

the reply content of the current utterance is generated at least based on the reply topic

**FIG. 1**

S21

a plurality of dialogue corpora are acquired

S22

a plurality of topic sequences are merged to acquire an initial topic transfer graph, wherein the plurality of topic sequences are acquired based on the plurality of dialogue corpora

S23

transfer probabilities between topics are calculated to acquire a directed weighted topic transfer graph

**FIG. 2**

reply topic

34

342 — second classifier

ac

341 — second feature calculation network

35

33

332 — first classifier

ae

331 — first feature calculation network

ap — 32

$a_{i-1}$ attention network $a_{i-1}$

as

language representation network — 31

topic transfer matrix

current utterance      target topic

**FIG. 3**

i-th word

42

| vocabulary generation unit | 424 |

$y_{i-1}$

| third fusion unit | 423 |

| first decoder | 421 |

| second decoder | 422 |

| second fusion unit | 416 |

41

| knowledge selector | 415 |

| first fusion unit | 414 |

| knowledge encoder | 411 |

| topic encoder | 412 |

| dialogue encoder | 413 |

knowledge graph      reply topic      dialogue history

**FIG. 4**

| acquiring circuitry | 51 |
| reading circuitry | 52 |
| topic determining circuitry | 53 |
| generating circuitry | 54 |

**FIG. 5**

## INTERNATIONAL SEARCH REPORT

| | International application No. |
|---|---|
| | **PCT/CN2023/082093** |

**A. CLASSIFICATION OF SUBJECT MATTER**

G06F16/9032(2019.01)i;G06F16/9035(2019.01)i;G06F16/906(2019.01)i;G06F16/901(2019.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 对话, 话题, 转移, 概率, 回复, 答复, 注意力, 融合, dialog, topic, transfer, probability, reply, answer, attention, fuse

**C. DOCUMENTS CONSIDERED TO BE RELEVANT**

| Category* | Citation of document, with indication, where appropriate, of the relevant passages | Relevant to claim No. |
|---|---|---|
| PX | CN 115186147 A (HUAYUAN COMPUTING TECHNOLOGY (SHANGHAI) CO., LTD.) 14 October 2022 (2022-10-14) claims 1-18 | 1-18 |
| Y | CN 112035633 A (TENCENT TECHNOLOGY (SHENZHEN) CO., LTD.) 04 December 2020 (2020-12-04) description, paragraphs [0004]-[0021] and [0047]-[0057], and figures 1-2 | 1-18 |
| Y | CN 112052321 A (PING AN TECHNOLOGY (SHENZHEN) CO., LTD.) 08 December 2020 (2020-12-08) description, paragraphs [0080]-[0081] | 1-18 |
| Y | CN 108829662 A (ZHEJIANG UNIVERSITY) 16 November 2018 (2018-11-16) description, paragraphs [0005]-[0063] | 5-10, 17-18 |
| A | CN 108388674 A (BAIDU ONLINE NETWORK TECHNOLOGY (BEIJING) CO., LTD.) 10 August 2018 (2018-08-10) entire document | 1-18 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 May 2023** | **24 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

<table>
<tr><td colspan="2"></td><td>International application No.<br>**PCT/CN2023/082093**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | WO 2017200076 A1 (NIPPON TELEGRAPH AND TELEPHONE CORP. et al.) 23 November 2017 (2017-11-23)<br>    entire document | 1-18 |

Form PCT/ISA/210 (second sheet) (July 2022)

**INTERNATIONAL SEARCH REPORT**
Information on patent family members

International application No.

**PCT/CN2023/082093**

| Patent document cited in search report | | | Publication date (day/month/year) | Patent family member(s) | | | Publication date (day/month/year) |
|---|---|---|---|---|---|---|---|
| CN | 115186147 | A | 14 October 2022 | None | | | |
| CN | 112035633 | A | 04 December 2020 | HK | 40034956 | A0 | 07 May 2021 |
| CN | 112052321 | A | 08 December 2020 | WO | 2022048170 | A1 | 10 March 2022 |
| CN | 108829662 | A | 16 November 2018 | None | | | |
| CN | 108388674 | A | 10 August 2018 | None | | | |
| WO | 2017200076 | A1 | 23 November 2017 | JPWO | 2017200076 | A1 | 13 December 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210612157